# EUROPÄISCHE PATENTSCHRIFT

(11) **EP 1 926 569 B1**
(45) Veröffentlichungstag und Bekanntmachung des Hinweises auf die Patenterteilung: **25.02.2009**
(21) Anmeldenummer: 05782473.2
(22) Anmeldetag: 06.09.2005
(51) Int. Cl.: B23K 26/42, B23K 7/10

(54) **VORRICHTUNG ZUR AUFNAHME VON PLATTENFÖRMIGEN MATERIALIEN FÜR ZUMINDEST EINEN TRENNVORGANG**
DEVICE FOR SUPPORTING SHEET-LIKE MATERIALS FOR AT LEAST ONE SEPARATING PROCESS
DISPOSITIF DESTINE A RECEVOIR DES MATERIAUX SOUS FORME DE PLAQUES POUR AU MOINS UN PROCESSUS DE SEPARATION

(43) Veröffentlichungstag der Anmeldung: 04.06.2008
(73) Patentinhaber: TRUMPF Werkzeugmaschinen GmbH + Co. KG, 71254 Ditzingen (DE)
(72) Erfinder: BLASER, Martin, 88267 Vogt (DE); GRAF, Daniel, 71254 Ditzingen (DE); WAHL, Eberhard, 73235 Weilheim (DE)
(74) Vertreter: Maser, Jochen
(86) Internationale Anmeldenummer: PCT/EP2005/009550
(87) Internationale Veröffentlichungsnummer: WO 2007/028404

(56) Entgegenhaltungen:
- WO-A-03/016004
- PATENT ABSTRACTS OF JAPAN Bd. 016, Nr. 321 (M-1279), 14. Juli 1992 (1992-07-14) & JP 04 091884 A (FUJITSU LTD), 25. März 1992 (1992-03-25) in der Anmeldung erwähnt
- PATENT ABSTRACTS OF JAPAN Bd. 2000, Nr. 09, 13. Oktober 2000 (2000-10-13) & JP 2000 153427 A (AMADA CO LTD), 6. Juni 2000 (2000-06-06) in der Anmeldung erwähnt

## Beschreibung

Die Erfindung betrifft eine Vorrichtung zur Aufnahme von plattenförmigen Materialien für zumindest einen Trennvorgang im plattenförmigen Material mit einer Schneidstrahleinrichtung, einer Bearbeitungsmaschine gemäß dem Oberbegriff des Anspruchs 1.

Aus der JP 4-91884, die als bester Stand der Technik gesehen wird, geht eine Laserbearbeitungsmaschine hervor, welche eine Vorrichtung zur Aufnahme von plattenförmigen Materialien für zumindest einen Trennvorgang im plattenförmigen Material umfasst. Durch eine Schneidstrahleinrichtung wird das plattenförmige Material bearbeitet. Das plattenförmige Material liegt auf einem Auflagetisch auf, der eine erste und zweite Auflagefläche umfasst, zwischen denen eine Strahlfangvorrichtung vorgesehen ist. Ein während der Bearbeitung des plattenförmigen Materials nach unten austretender Schneidstrahl wird von der Strahlfangvorrichtung aufgenommen, so dass das bandförmige Material, welches zur Bildung der ersten und zweiten Auflagefläche eingesetzt ist, nicht beschädigt wird. Bei dieser Vorrichtung wird über einen Elektromotor ein Gehäuse relativ zu feststehenden Umlenkachsen des bandförmigen Materials bewegt, wodurch die Auflageflächen in der Größe variabel sind, so dass der gesamte Bereich des plattenförmigen Materials durch die Schneidstrahleinrichtung zur Bearbeitung zur Verfügung steht und die Strahlfangvorrichtung unterhalb eines Schneidkopfes der Schneidstrahleinrichtung positioniert ist.

Diese Vorrichtung ist für kleine und leichte Größen des plattenförmigen Materials ausgebildet. Darüber hinaus kann eine Verkippung oder Beeinträchtigung der Lage des plattenförmigen Materials aufgrund von einer Durchbiegung der bandförmigen Auflagefläche erfolgen.

Aus der JP 2000-153427 ist eine Laserbearbeitungsmaschine bekannt geworden, welche eine Vorrichtung zur Aufnahme von plattenförmigen Materialien für zumindest einen Trennvorgang im plattenförmigen Material aufweist, bei der die erste und zweite Auflagefläche durch parallel nebeneinander angeordnete Rohre ausgebildet ist, welche an deren jeweiligen Außenseiten mit einer Kette verbunden ist. Eine solche Vorrichtung ermöglicht zwar in Längsachse der Rohre gesehen eine Aussteifung der Auflagefläche zur Aufnahme von großflächigen und schweren Werkstücken, jedoch ist ebenfalls der Nachteil gegeben, dass in der Verfahrrichtung einer zwischen den Auflageflächen angeordneten Strahlfangvorrichtung eine Durchbiegung der Auflagefläche auftreten kann. Dadurch kann eine nachteilige Beeinflussung der Bearbeitungsstelle gegeben sein.

Aus der WO 03/016004 A1 geht des Weiteren eine Vorrichtung zur Lagerung von flächigem Material für zumindest einen Trennvorgang im plattenförmigen Material mit einer Schneidstrahleinrichtung hervor. Diese Vorrichtung weist ein Kettengliederband auf, welches durch Teleskoparme getragen ist, die die Größe der ersten und zweiten Auflagefläche in Abhängigkeit deren Hubbewegung bestimmen. Diese Vorrichtung ist durch die Ausgestaltung von horizontal sich erstreckenden Teleskoparmen in der maximalen Lastaufnahme als auch in der Größe der Auflagefläche beschränkt. Darüber hinaus ist eine Anordnung und Einbindung einer Strahlfangvorrichtung nicht vorgesehen.

Die Vorrichtungen gemäß der JP 2000-153427 und der WO 03/016004 A1 weisen beide den Nachteil auf, dass die Auflagefläche durch die Ausbildung von Kettengliedern nicht vollständig geschlossen ist. Dadurch besteht eine Verhakungsgefahr von Gut- und Restteilen mit der Auflagefläche.

Der Erfindung liegt die Aufgabe zugrunde, eine Vorrichtung zur Aufnahme von plattenförmigen Materialien für zumindest einen Trennvorgang im plattenförmigen Material zu schaffen, welche die Ausgestaltung eines großflächigen Auflagetisches aus zwei Auflageflächen und einer dazwischen verfahrbar angeordneten Strahlfangvorrichtung ermöglicht.

Diese Aufgabe wird erfindungsgemäß durch die Merkmale des Anspruchs 1 gelöst. Weitere vorteilhafte Ausgestaltungen und Weiterbildungen sind in den weiteren abhängigen Ansprüchen angegeben.

Durch die Ausgestaltung von zumindest einem geschlossenen Raum mit einem flexiblen Material welches die erste und zweite Auflagefläche bildet und Bestandteil des geschlossenen Raumes ist, der mit einem gasförmigen Medium unter Druck gefüllt ist, wird ermöglicht, dass einem Durchhängen oder Durchbiegen der ersten und zweiten Auflagefläche aufgrund eines in zumindest einem geschlossenen Raum wirkenden Innendrucks entgegengewirkt wird. Dadurch können sehr große Auflageflächen zur Aufnahme auch von schweren Werkstücken bzw. plattenförmigen Materialien ermöglicht werden. Gleichzeitig wird sichergestellt, dass das plattenförmige Material während dem Verfahren der Strahlfangvorrichtung, wodurch sich die Größe der ersten Auflagefläche zur zweiten Auflagefläche ändert, seine Ausrichtung der Auflageebene beibehält, so dass während der Bearbeitung gleichbleibende Bedingungen gegeben sind. Dadurch wird die Qualität des Schneidspaltes sowie die Präzision in der Herstellung von Gutteilen erhöht.

Nach einer vorteilhaften Ausgestaltung der Erfindung ist vorgesehen, dass das flexible Material als Band ausgebildet ist, dessen äußerer Randbereich ein nach oben offenes Grundgehäuse zum Aufbau eines Innendruckes abschließt. Das Grundgehäuse und das flexible Material bilden den geschlossenen Raum, wobei an dem Grundgehäuse zusätzlich noch ein Deckel vorgesehen sein kann. Dadurch ist ein konstruktiv einfacher Aufbau gegeben. Das flexible Material kann durch den Innendruck gegen das aufliegende plattenförmige Material gedrückt werden und eine vollflächige Auflage bilden.

Bevorzugt ist vorgesehen, dass der Innendruck im geschlossenen Raum mit einem Druckmessgerät erfassbar ist und insbesondere eine Druckregelung zur Einstellung des Innendruckes zumindest in Abhängigkeit der Dicke und des Werkstoffes des plattenförmigen Materials vorgesehen ist. Dadurch ist eine Anpassung an unterschiedliche Bearbeitungsaufgaben und sich ändernde Arbeitsbedingungen, wie beispielsweise Temperaturänderungen, zur Plananlage des plattenförmigen Materials auf den Auflageflächen. Durch die Druckregelung, welche zumindest eine Steuerung und ein Druckmessgerät umfasst, kann ein Gleichgewicht zwischen aufliegender Last und Innendruck geschaffen werden, um die Plananlage zu ermöglichen.

Zum Verfahren der zwischen der ersten und zweiten Auflagefläche angeordneten Strahlfangvorrichtung ist bevorzugt vorgesehen, dass das ruhend zum Grundgehäuse angeordnete flexible Material unterhalb der Strahlfangvorrichtung durchgeführt und umgelenkt wird. Dadurch wird eine Art fortschreitende Welle während dem Verfahren der Strahlfangvorrichtung erzeugt, wobei das die Auflageflächen bildende flexible Material in Ruhe bleibt. Die Strahlfangvorrichtung fährt dem Schneidkopf in X-Richtung nach oder ist mit dessen Antrieb gekoppelt. Bevorzugt wird das flexible Material durch einen zur Strahlfangvorrichtung zumindest abschnittsweise gebildeten Spalt hindurchgeführt, der durch ein Formungselement oder durch Umlenkrollen ausgebildet ist und einen Umlenkbereich bildet. Dadurch kann eine definierte Führung beziehungsweise eine Zwangsumlenkung des flexiblen Materials gegeben sein.

Des Weiteren ist bevorzugt vorgesehen, dass zwischen dem Formungselement und dem flexiblen Material und/oder zwischen einer Außenkontur der Strahlfangvorrichtung und dem umgelenkten flexiblen Material und/oder zwischen einer Stirnseite der Strahlfangvorrichtung und einem auf den Auflageflächen aufliegenden plattenförmigen Material reibungsarme Elemente vorgesehen sind. Diese reibungsarmen Elemente können vorzugsweise als freilaufende oder angetriebene Rollenelemente, Bürstenelemente, Gleitwerkstoffe, Gleitbeschichtungen oder als Luftfilmbett, ausgebildet sein. Dadurch wird ermöglicht, dass die Strahlfangvorrichtung mit reduzierter Reibung bewegbar ist und eine einmal eingenommene Positionierung des plattenförmigen Materials auf dem Auflagetisch aufrecht erhalten wird.

Bevorzugt ist vorgesehen, dass das Gehäuse der Strahlfangvorrichtung eine glockenförmige Außenkontur aufweist, dadurch kann eine weiche Welle des flexiblen Materials bei der Umlenkung ausgebildet werden, wodurch eine leichtgängige Verschiebbarkeit der Strahlfangvorrichtung gegenüber dem flexiblen Material gegeben ist.

Bevorzugt ist ein mehrteiliges Grundgehäuse vorgesehen, das mit dem flexiblen Material einen geschlossenen Raum bildet, wobei das mehrteillge Grundgehäuse an den Schnittstellen eine statische Abdichtung umfasst. Dadurch kann das Grundgehäuse gegen Druckverlust gesichert sein. Vorzugsweise ist eine Schweiß-, Klebe- oder Klemmkonstruktion vorgesehen. Ebenso können Nuten mit einer Gummidichtung, Moosgummidichtung oder Schnurdichtungen oder dergleichen vorgesehen sein.

Nach einer weiteren vorteilhaften Ausgestaltung der Erfindung ist vorgesehen, dass die Stirnseiten des flexiblen Materials unter Vorspannung, vorzugsweise durch eine Spannvorrichtung, am Gehäuse befestigt sind. Dadurch kann eine Einstellung der Bandspannung in Abhängigkeit von unterschiedlichen Temperaturen gegeben sein. Zusätzlich kann die Vorspannung auf das Gewicht des plattenförmigen Materials oder Werkstücks angepasst werden.

Nach einer weiteren vorteilhaften Ausgestaltung der Erfindung ist vorgesehen, dass eine seitliche Abdichtung der in X- und/oder Y-Richtung verlaufenden Längskanten des flexiblen Materials durch eine lösbar am Grundgehäuse angeordnete Abdichtung vorgesehen ist, welche vorzugsweise durch eine Magnethalterung, insbesondere mit einer Beflockung und/oder einem Moosgummi, ein Klettband, eine Vakuumansaugung oder eine mechanische Klemmung ausgebildet ist. Das flexible Material ist durch einen Deckel zum Gehäuse gehalten, der sich zumindest geringfügig in Richtung Auflagefläche erstreckt. Der Deckel ist bevorzugt als Rahmen zu den Auflageflächen ausgebildet. Dieser Deckel ist beispielsweise im Randbereich magnetisch ausgebildet, so dass das flexible Material, welches in einer bevorzugten Ausführungsform zumindest einen magnetischen Bestandteil umfasst, an einer Unterseite des Deckels anliegt und gehalten ist. Zusätzlich wird das flexible Material durch den Innendruck gegen die Unterseite gedrückt. Dadurch kann eine lösbare Abdichtung erfolgen. Gleichzeitig kann diese Abdichtung benachbart zur Spannvorrichtung eingesetzt werden und die jeweiligen Stirnseiten abdichten. Alternativ kann die seitliche Abdichtung durch ein Haken- und Flauschband vorgesehen sein. Des Weiteren kann in dem Deckel eine Vakuumansaugung angeordnet sein, welche das flexible Band zur Unterseite des Deckels lösbar positioniert. Ebenso können mechanische Klemmungen vorgesehen sein, die bereichsweise durch Aktuatoren ansteuerbar sind, um eine lösbare Anordnung zu realisieren. Zusätzlich können zwischen dem Deckel und dem auf der Unterseite anliegenden Randbereich des flexiblen Materials Dichtelemente wie beispielsweise eine Beflockung, Dichtstreifen aus Teflon, Gummi oder Moosgummi vorgesehen sein.

Nach einer weiteren vorteilhaften Ausgestaltung der Erfindung ist vorgesehen, dass das flexible Material im Umlenkbereich eine dynamische Abdichtung umfasst, die vorzugsweise durch ein Flockbett, eine gleitende Dichteinrichtung wie beispielsweise eine Teflongleitdichtung oder Grafitelemente gebildet ist. Diese dynamische Abdichtung ist ebenfalls im seitlichen Randbereich ausgebildet, beispielsweise durch einen beflockten Spalt, der durch das Führungselement zum Gehäuse der Strahlfangvorrichtung gebildet ist. Dadurch ist ein nahezu lückenloser Übergang von der seitlichen Abdichtung des flexiblen Bandes an der Unterseite eines Deckels zur dynamischen Abdichtung im Umlenkbereich gegeben.

Nach einer weiteren vorteilhaften Ausgestaltung der Erfindung ist vorgesehen, dass in dem geschlossenen Raum eine Antriebseinheit vorgesehen ist, welche an der Strahlfangvorrichtung oder einer daran angeordneten Komponente angreift. Dadurch kann eine kompakte Vorrichtung geschaffen werden, welche alle Komponenten innerhalb eines Grundgehäuses zur Bildung des geschlossenen Raumes aufnimmt.

Alternativ kann vorgesehen sein, dass zumindest ein Antriebs- und/oder Führungselement, welches an der Strahlfangvorrichtung oder einer daran angeordneten Komponente angreift, aus dem geschlossenen Raum herausgeführt ist und mit einem außerhalb des geschlossenen Raumes vorgesehenen Antriebsmotor verbunden ist. Diese Ausführungsform ermöglicht zumindest einen einfachen Austausch der Antriebsmotoren. Des Weiteren kann alternativ vorgesehen sein, dass eine berührungslose Kraftübertragung beispielsweise mittels einer Magnetkupplung vorgesehen sein kann. Dadurch ist gleichzeitig eine Überlastsicherung vorgesehen.

Nach einer weiteren alternativen Ausgestaltung der Erfindung ist vorgesehen, dass eine seitliche Rollbandabdichtung vorgesehen ist, welche insbesondere einen seitlichen Führungsspalt zum Verfahren der Strahlfangvorrichtung abschließt. Eine solche Rollbandabdichtung ermöglicht die Herausführung einer Platte, eines Stabes oder dergleichen, durch welche die Strahlfangvorrichtung hin und her bewegbar ist. Dabei kann die Platte mit der Bewegungseinheit des Schneidkopfes gekoppelt sein oder separat angetrieben werden. Durch die Rollbandabdichtung, welche insbesondere in einem Flockbett geführt ist, erfolgt eine Abdichtung des Führungsspaltes.

Nach einer weiteren bevorzugten Ausgestaltung der Erfindung ist vorgesehen, dass eine Kühlung der Auflageflächen, insbesondere durch eine Gasumwälzung, Sprühkühlung, Wasserflutung oder zumindest durch an der Strahifangvorrichtung vorgesehene und mitbewegte Kühlelemente im geschlossenen Raum vorgesehen ist. Dadurch kann die während der Bearbeitung über das Werkstück bzw. plattenförmige Material auf das flexible Material übertragene Wärme abgeführt werden, um Ausdehnungen oder Beschädigungen des flexiblen Materials durch Temperatureinflüsse zu minimieren bzw. zu vermeiden.

Nach einer weiteren vorteilhaften Ausgestaltung der Erfindung ist vorgesehen, dass der Deckel des Grundgehäuses eine Öffnung aufweist, die zur Aufnahme des Werkstücks ausgebildet ist. Das plattenförmige Material entspricht in den äußeren Abmessungen der Öffnung des Deckels, so dass dieses während der Bearbeitung lagegesichert aufgenommen ist. Bevorzugt können zusätzliche Halteelemente vorgesehen sein, um das plattenförmige Material in einer vorbestimmten Position zu sichern.

Nach einer vorteilhaften Ausgestaltung der Erfindung ist vorgesehen, dass die erste und zweite Auflagefläche aus einem gemeinsamen flexiblen Material ausgebildet sind und einen geschlossenen Raum als Luftpolster bilden. Dieser geschlossene Raum ist mediendicht abgeschlossen. Durch die Ausgestaltung eines solchen Luftpolsters, das aufgrund des flexiblen Materials an sich sehr weich ist, schmiegt sich die Oberfläche vollständig an das plattenförmige Material an. Dadurch kann eine sehr gute Dämpfung erfolgen, so dass das plattenförmige Material nicht zu Schwingungen angeregt wird. Gleichzeitig wird durch diese Ausgestaltung eine selbständige Ausnivellierung des aufliegenden plattenförmigen Materials in eine Ebene senkrecht zum Schneidstrahl ermöglicht.

Bevorzugt ist vorgesehen, dass auf dem aus flexiblen Material gebildeten geschlossenen Raum als Luftpolster ein flexibles Isoliergewebe vorgesehen ist. Dieses bevorzugte Isoliergewebe schützt das flexible Material vor Beschädigung und starker Aufwärmung. Dieses Isoliergewebe ist bevorzugt austauschbar, so dass nach einer bestimmten Betriebsdauer ein neues Isoliergewebe eingesetzt werden kann. Sobald unmittelbar nach der Einbringung eines Schneidspaltes ein Verfahren der Strahlfangvorrichtung erfolgt, können aufgrund der Energieabsorption im Randbereich des Schneidspaltes hohe Temperaturen auf den geschlossenen Raum einwirken, die durch das Isoliergewebe gegenüber dem Luftpolster abgeschirmt werden. Gleichzeitig schützt das flexible Isoliergewebe vor gegebenenfalls vorliegenden scharfen Kanten, Grate und/oder anhaftenden Schlacketeilen an hergestellten Gut- und Restteilen.

Nach einer weiteren vorteilhaften Ausgestaltung des als Luftpolster ausgebildeten und geschlossenen Raumes ist vorgesehen, dass zwischen einer Auflagefläche und einer Unterseite des geschlossenen Raumes Abstandshalter, vorzugsweise Halteglieder, Bänder oder Schnüre vorgesehen sind. Dadurch kann entlang einer großen Fläche sichergestellt werden, dass die Auflagefläche im Wesentlichen parallel zur Unterseite gehalten wird. Darüber hinaus ist ermöglicht, dass bei einer nicht vollständigen Abdeckung der Auflageflächen durch das flächenförmige Material eine Ausdehnung in den freien Randbereichen verhindert wird.

Nach einer weiteren alternativen Ausgestaltung ist vorgesehen, dass ein oder mehrere Abstandshalter zumindest bereichsweise entlang der Auflageflächen im Abstand zur Auflagefläche oder der Unterseite verringerbar sind. Dadurch kann beispielsweise bei einer entsprechenden Auswahl der Abstandshalter ermöglicht werden, dass eine Auflagefläche einen wellenförmige Kontur einnimmt. Dadurch entstehen Freiräume zwischen dem aufliegenden plattenförmigen Material und dem geschlossenen Raum, so dass eine Be- und Entladeeinheit, wie beispielsweise ein Rechen, das plattenförmige Material untergreifen kann, wodurch eine automatisches Be- und Entladen des plattenförmigen Materials ermöglicht ist.

Zwischen der ersten und zweiten Auflagefläche ist eine Strahlfangvorrichtung vorgesehen, dessen Öffnung zur Aufnahme des nach unten austretenden Strahles während der Bearbeitung des plattenförmigen Materials im Wesentlichen in der Ebene der Auflageflächen liegt und das Gehäuse sich zum geschlossenen Raum hin erstreckt und vom flexiblen Material umgeben ist. Dadurch ist die Strahlfangvorrichtung quasi in dem Luftpolster eingebettet. Durch das Isoliergewebe zwischen der Strahlfangvorrichtung und dem Luftpolster ist sichergestellt, dass das Luftpolster nicht durch Hitze beschädigt wird.

Bevorzugt ist vorgesehen, dass der Strahlfangvorrichtung gegenüberliegend an der Unterseite des als Luftpolster ausgebildeten geschlossenen Raumes ein Ausgleichselement vorgesehen ist, welches der Strahlfangvorrichtung entspricht. Dieses Ausgleichselement wird bevorzugt mit dem Strahlführungselement gekoppelt, so dass die Länge der Luftpolsteroberfläche auf der Ober- und Unterseite des Luftpolsters gleich groß ist und vorzugsweise die Befestigungen der Abstandshalter oben und unten einander gegenüberliegen.

Nach einer weiteren vorteilhaften Ausgestaltung der Erfindung ist vorgesehen, dass zum Verdrängen des flexiblen Materials während dem Verfahren der Strahlfangvorrichtung eine Transportvorrichtung vorgesehen ist, durch welche die Strahlfangvorrichtung gegenüber dem ruhenden geschlossenen Raum bewegbar ist. Dadurch kann in einfacher Weise eine Bewegung der Strahlfangvorrichtung in X-Richtung ermöglicht werden.

Die Transportvorrichtung ist bevorzugt als umlaufendes, insbesondere angetriebenes Band durch Rollen-, Kugellager oder als Rollen-, Kugelmatte ausgebildet ist. Diese Transportvorrichtung, die an der Strahlfangvorrichtung vorgesehen ist, ermöglicht eine eigenständige Bewegung der Strahlfangvorrichtung im Luftpolster. Dadurch können die einzelnen Abschnitte des flexiblen Materials schonend unterhalb der Strahlfangvorrichtung durchgeführt werden, wobei während der Verfahrbewegung die Strahlfangvorrichtung vollständig in dem als Luftpolster ausgebildeten und geschlossenen Raum eingebettet bleibt. Das Ausgleichselement ist bevorzugt mit der Strahlfangvorrichtung gekoppelt. In diesem Ausgleichselement können ebenfalls solche Transportvorrichtungen vorgesehen sein.

Nach einer weiteren vorteilhaften Ausgestaltung der Erfindung ist vorgesehen, dass zwischen den gegenläufigen Abschnitten der Transportvorrichtung, welche die Strahlfangvorrichtung zumindest teilweise umgibt, Gleitelemente vorgesehen sind, die vorzugsweise mit einer Gleichbeschichtung versehen oder mit Druckluft zur Bildung eines Luftfilmes beaufschlagt sind. Dadurch kann eine Verringerung der Reibung und somit eine Erhöhung der Leichtgängigkeit und Verfahrgeschwindigkeit ermöglicht sein.

Die Gleitelemente können sich bevorzugt bis in die Auflageebene des plattenförmigen Materials erstrecken und an einer Unterseite des plattenförmigen Materials anliegen. Dadurch kann die Reibung während der Bewegung der Strahlfangvorrichtung verringert werden. Diese Gleitelemente können insbesondere Luftdüsen oder eine Gleitbeschichtung als auch Antriebsrollen aufweisen.

Das flexible Isoliergewebe ist im gegenüberliegenden geschlossenen Raum verschiebbar vorgesehen. Dadurch kann ein zusätzlicher Transport des plattenförmigen Materials vorgesehen sein.

Nach einer weiteren alternativen Ausführungsform der Erfindung ist vorgesehen, dass die erste und zweite Auflagefläche jeweils durch einen als Luftpolster geschlossenen Raum ausgebildet sind. Dadurch ist das Luftpolster zweiteilig ausgebildet, so dass für jede Auflagefläche eine getrennte Ansteuerung ermöglicht ist.

Nach einer weiteren vorteilhaften Ausgestaltung der Erfindung ist vorgesehen, dass die erste und zweite Auflagefläche jeweils durch ein flexibles Isoliergewebe abgedeckt sind. Dadurch kann der Vorteil erzielt werden, dass das flexible Isoliergewebe der ersten und zweiten Auflagefläche getrennt voneinander zum jeweiligen Luftpolster bewegbar sind. Dadurch kann der Automatisierungsgrad erhöht werden, indem beispielsweise ein flexibles Isolierband in eine Be- oder Entladeposition ausgefahren wird, um ein flächenförmiges Material aufzunehmen, welches anschließend über das flexible Isoliergewebe in eine Arbeitsposition zum Schneidkopf übergeführt wird.

Nach einer weiteren vorteilhaften Ausgestaltung der Erfindung ist vorgesehen, dass das erste und zweite Luftpolster jeweils einen Luftpolsterspeicher umfassen, die vorzugsweise beidseitig der Strahifangvorrichtung vorgesehen sind. Durch solche Luftpolsterspeicher kann eine Anpassung der Größe der ersten und zweiten Auflagefläche in Abhängigkeit der Verschiebeposition der Strahlfangvorrichtung vorgesehen sein. Gleichzeitig kann eine ebene Auflagefläche des Auflagetisches für das plattenförmige Material in einer vorgesehenen Ebene beibehalten werden.

Bevorzugt weist die Luftpolstereinheit zumindest eine Umlenkeinheit und insbesondere eine Aufwickeleinheit für das flexible Isoliergewebe auf. Dadurch kann eine sichere Aufnahme des plattenförmigen Materials im Bereich einer Öffnung der Strahlfangvorrichtung vorgesehen sein. Gleichzeitig kann das flexible Isoliergewebe als Transporteinrichtung für das plattenförmige Material vorgesehen sein. Durch die Aufwickeleinheit kann insbesondere eine Spannung im flexiblen Isoliergewebe aufrechterhalten bleiben.

Zumindest an einem Ende der ersten oder zweiten Auflagefläche ist bevorzugt eine Verlängerung des flexiblen Isoliergewebes als Transportband verwendet werden, um somit zusätzlich zu der Verkürzung der Abstandshalter für die Be- und Entladung des plattenförmigen Materials einsetzbar ist.

Das erste und zweite Luftpolster sind bevorzugt durch eine Verbindungsleitung miteinander verbunden. Dadurch kann automatisch ein Druckausgleich bei der Veränderung der Größe der Auflagefläche und somit des Volumens des Luftpolsters gegeben sein.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
- Figur 1: eine perspektivische Darstellung einer ersten erfindungsgemäßen Ausführungsform der Vorrichtung,
- Figur 2: eine schematische Schnittdarstellung einer weiteren erfindungsgemäßen Ausführungsform der Vorrichtung zu Figur 1,
- Figur 3: eine schematisch vergrößerte Schnittdarstellung einer seitlich angeordneten, lösbaren Abdichtung der Vorrichtung gemäß der Ausführungsform in Figur 1,
- Figur 4: eine schematische Schnittdarstellung einer dynamischen Abdichtung im Umlenkbereich der Vorrichtung gemäß der Ausführungsform gemäß Figur 1,
- Figur 5: eine schematische Teilansicht auf ein an der Strahlfangvorrichtung angeordnetes Führungselement zur Ausbildung einer dynamischen Abdichtung gemäß Figur 4,
- Figur 6: eine schematische Schnittdarstellung einer seitlichen Rollbandabdichtung zur verfahrbaren Anordnung der Strahlfangvorrichtung,
- Figur 7: eine Seitenansicht der Rollbandabdichtung gemäß Figur 6,
- Figur 8: eine alternative Ausführungsform der erfindungsgemäßen Vorrichtung zu Figur 1,
- Figur 9: eine schematische Schnittdarstellung einer alternativen erfindungsgemäßen Ausführungsform zur Vorrichtung gemäß Figur 1,
- Figur 10a-c: schematische Seitenansichten von Transportvorrichtungen für die Strahlfangvorrichtung der alternativen Ausführungsform gemäß Figur 9,
- Figur 11: einen schematischen Teilschnitt der Vorrichtung gemäß Figur 9 in einer weiteren Arbeitsposition und
- Figur 12: eine schematische Seitenansicht einer weiteren alternativen Ausführungsform der Vorrichtung gemäß Figur 9.

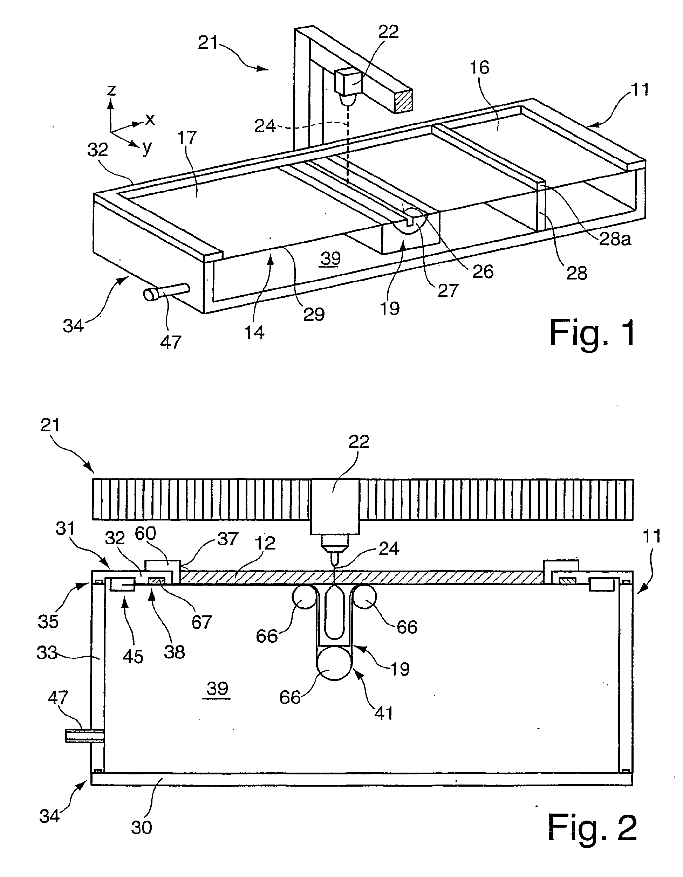

In Figur 1 ist perspektivisch eine erfindungsgemäße Vorrichtung 11 zur Aufnahme eines Werkstück bzw, plattenförmigen Materials 12 dargestellt. Dies Vorrichtung 11 umfasst einen Auflagetisch 14, der aus einer ersten und zweiten Auflagefläche 16, 17 gebildet ist. Die Vorrichtung 11 ist Teil eines nicht näher dargestellten Maschinenbettes oder bildet ein Maschinenbett einer Bearbeitungsmaschine 21, insbesondere einer Laserschneidmaschine oder Brennstrahlmaschine. Zur Bearbeitung eines plattenförmigen Materials 12 auf dem Auflagetisch 14 wird über einen Schneidkopf 22 ein Schneidstrahl 24 auf das plattenförmige Material 12 gerichtet. Der Schneidstrahl 24 tritt auf einer Unterseite des Werkstücks 12 aus und tritt über eine linienförmige Öffnung 26 in ein Gehäuse 27 einer Strahlfangvorrichtung 19 ein. Zwischen der ersten und zweiten Auflagefläche 16, 17 ist die Strahlfangvorrichtung 19 vorgesehen, welche in X-Richtung verfahrbar ist. Der Schneidkopf 22 ist zur Bearbeitung des gesamten plattenförmigen Materials 12 zusätzlich zur Y-Richtung auch in X-Richtung verfahrbar. Die Strahlfangvorrichtung 19 ist zum Schneidkopf 22 bezüglich dessen Bewegungen in X-Richtung gekoppelt. Beim Verfahren der Strahlfangvorrichtung 19 in oder entgegen der X-Richtung vergrößert oder verkleinert sich die erste Auflagefläche 16 und zweite Auflagefläche 17 entsprechend.

Die erste und zweite Auflagefläche 16, 17 wird durch ein durchgehendes flexibles Material 29 ausgebildet. Dieses flexible Material 29 kann durch eine dünne Stahlfolie, eine Verbundfolie aus Stahlgummi und/oder Faserwerkstoffen ausgebildet sein. Des Weiteren kann eine gehärtete oder rostfreie Metallfolie sowie eine mehrschichtig verklebte Metallfolie vorgesehen sein. Darüber hinaus können Mehrschichtfolien mit metallischer Deckschicht und organischen oder anorganischen Zwischenschichten, metallische Folien mit seitlich befestigten magnetischen Streifen oder magnetischen Schichten, metallische Mehrschichtfolien mit beispielsweise magnetischem Kern und unmagnetischen rostfreien Deckschichten, organische Folien mit anorganischen oder organischen Gewebeeinlagen, insbesondere PTFE-Folien mit Glasfasergewebeeinlage oder Aramitfasergewebeeinlage oder dergleichen vorgesehen sein.

Ein Grundgehäuse 34 und das flexible Material 29 bilden einen geschlossenen Raum 39, in welchem ein Innendruck aufgebaut ist. Durch diesen Innendruck wird insbesondere im mittleren Bereich der jeweiligen Auflagefläche 16, 17 ein Durchhängen oder zumindest geringfügiges Absacken der Auflagefläche 16, 17 verhindert.

In dem geschlossenen Raum 39 wird über eine Zuleitung 47, welche an einen nicht näher dargestellten Kompressor oder Druckluftversorgungsstelle angeschlossen ist, einen Innendruck erzeugt. Eine Regelung des Innendruckes erfolgt mit einer Steuerung, welche den herrschenden Innendruck von einem Druckmessgerät erhöht und gleichzeitig Daten des plattenförmigen Materials 12 verarbeitet, so dass der Innendruck auf die Bearbeitungssituation anpassbar ist. Dadurch kann eine Plananlage des plattenförmigen Materials 12 auf dem Auflagetisch 14 und somit ein Gleichgewicht zwischen Innendruck und Lastaufnahme erzielt werden. In der Steuerung kann bevorzugt ein Schwellwert hinterlegt werden, so dass ab einer zu tragenden Mindestlast durch den Auflagetisch 14 eine Druckregelung erfolgt. Insbesondere bei dicken oder schweren Blechten ist eine Nachregelung vorgesehen, wohingegen bei dünneren plattenförmigen Materialien eine einheitliche Druckbeaufschlagung gegeben sein kann.

Des Weiteren kann vorteilhafterweise vorgesehen sein, dass bei plattenförmigen Materialien, die nicht vollständig die Auflagefläche 16, 17 überdecken, eine verfahrbare Wand 28 vorgesehen ist, durch welche die durch das plattenförmige Material 12 nicht abgedeckte Auflagefläche 16, 17 verkürzt beziehungsweise abgegrenzt wird. Diese verfahrbare Wand 28 ist beispielhaft parallel zur Strahlfangvorrichtung 19 verfahrbar. Diese verfahrbare Wand 28 ermöglicht des Weiteren, dass eine Ausbeulung des Bereiches, der nicht von dem plattenförmigen Material 12 überdeckt ist, nicht erfolgt und eine plane Anlage des plattenförmigen Materials 12 zu den Auflageflächen 16 und 17 erzielt wird. Die verfahrbare Wand 28 weist zur Unterseite des flexiblen Materials 29 eine Dichtung auf, die beispielsweise in den Figuren 2 bis 5 als seitliche Abdichtung näher beschrieben ist. Das flexible Material 29 ist über einen verfahrbaren Deckelabschnitt 28a zur verfahrbaren Wand 28 positioniert und gemeinsam mit dieser verfahrbar, so dass das flexible Material 29 auf einer Stirnseite der verfahrbaren Wand 28 aufliegt und beispielsweise durch Magnete zu dieser Wand 28 gehalten ist. Der Innenraum 39 wird dadurch verkürzt und ist mit einem Innendruck beaufschlagt. Zwischen dem verfahrbaren Wandabschnitt 28 und der Seitenwand 33 liegt ein Atmosphärendruck vor.

Zur Erzeugung eines Innendruckes ist ein geschlossener Raum 39 erforderlich, der jedoch nicht zu hundert Prozent luftdicht ausgebildet sein muss. Geringe Leckagen können durch nachgeführte Druckluft ausgeglichen werden, wobei die Funktion zur großflächigen Ausbildung des Auflagetisches 14 erhalten bleibt.

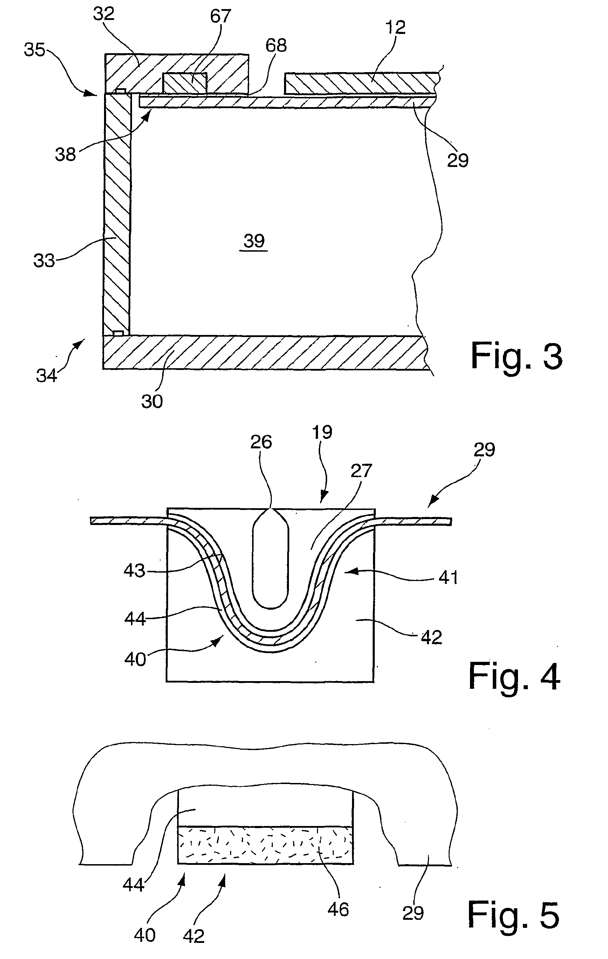

Bei der in Figur 1 dargestellten Ausführungsform der Vorrichtung 11 wird das flexible Material 29 unter der Strahlfangvorrichtung 19 umgelenkt, so dass eine fortlaufende Welle ausgebildet ist. Diese Ausgestaltung ist nachfolgend näher in Figur 4 beschrieben.

In Figur 2 ist eine schematische Schnittdarstellung einer weiteren Ausführungsform der Vorrichtung 11 zu Figur 1 dargestellt. Das Grundgehäuse 34 ist mehrteilig ausgebildet und umfasst einen Boden 30, Gehäuseseitenwände 33 und zumindest einen Deckel 32, die durch statische Abdichtungen 35 dicht miteinander verbunden sind. Eine solche statische Abdichtung kann durch eine Schweiß-, Klebe- oder Klemmkonstruktion ausgebildet sein. Beispielsweise können, wie im Ausführungsbeispiel dargestellt, in Nuten Dichtungen, wie beispielsweise Moosgummidichtungen, Schnurdichtungen oder dergleichen, vorgesehen sein.

Zur Bildung des geschlossenen Raumes 39 ist des Weiteren erforderlich, dass eine seitliche Abdichtung 38 des flexiblen Materials 39 zum Grundgehäuse 34 vorgesehen ist. Diese seitliche Abdichtung 38 ist bevorzugt an Stirnseiten 31 zumindest verschiebbar, insbesondere auch lösbar, vorgesehen. Dadurch kann eine Spannvorrichtung 45 das flexible Material 29 in X-Richtung unter Spannung setzen, wodurch eine Unterstützung zur Lastaufnahme gegeben ist. Gleichzeitig können Wärmedehnungen kompensiert werden. Die Spannvorrichtung 45 ist nur schematisch dargestellt und kann über Walzen, Exzenter oder dergleichen eine Bandspannung aufbringen.

Der Deckel 32 weist ein Adapterstück 60 auf, das an dem Deckel 32 angreifen kann. Dieses Adapterstück 60 oder der Deckel 32 selbst weist bevorzugt eine geringfügig geschrägte Stirnfläche 37 auf, um das plattenförmige Material 12 in einfacher Weise einlegen zu können und eine lagerichtige Positionierung auf dem Auflagetisch 14 sicherzustellen.

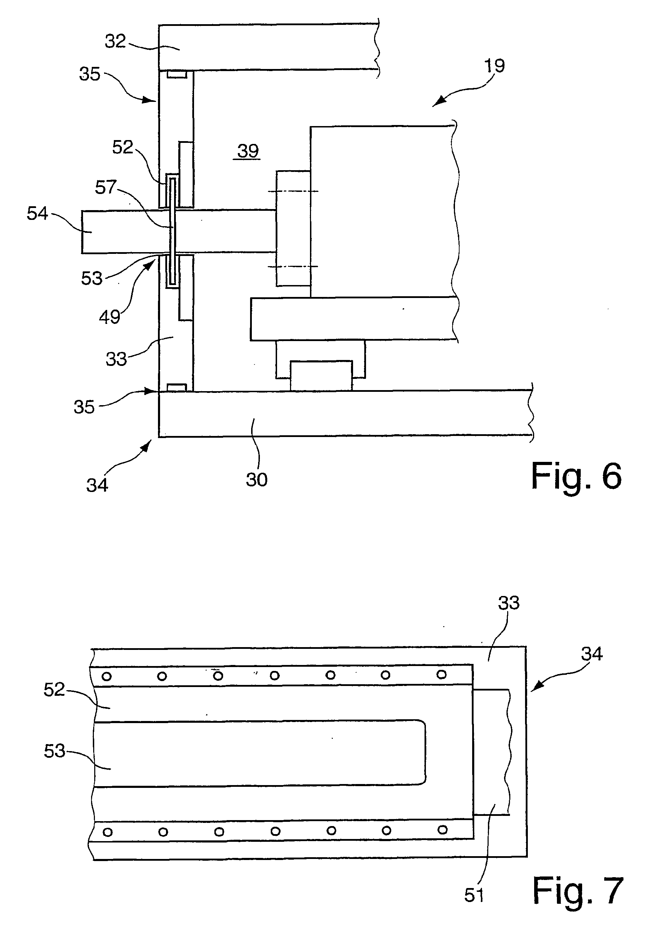

In Figur 2 ist eine alternative Ausführung im Umlenkbereich 41 zu Figur 1 dargestellt. Die Ausbildung einer fortlaufenden Welle wird dem Grunde nach beibehalten, jedoch sind Umlenkwalzen 66 vorgesehen, die eine Umlenkung des flexiblen Materials 29 ermöglichen, damit die Strahlfangvorrichtung 19 in X-Richtung verfahrbar ausgebildet ist. Diese Umlenkwalzen 66 können einen eigenen Antrieb umfassen. Alternativ kann auch ein Antrieb gemäß einer in Figur 6 und 7 dargestellten Ausführungsform vorgesehen sein.

Eine seitliche Abdichtung 38 des flexiblen Materials 29 im Grundgehäuse 34 ist aufgrund der verfahrbaren Strahlfangvorrichtung 19 lösbar ausgebildet. Diese lösbare Abdichtung ist in Figur 3 näher dargestellt. Das flexible Material 29 liegt an einer Unterseite des Deckels 32 an. Durch den im geschlossenen Raum 39 aufgebrachten Innendruck wird dies unterstützt. Zusätzlich kann bei einem flexiblen Material 29, welches magnetische Eigenschaften aufweist, eine Magnethaftung durch in dem Deckel 32 vorgesehene Magnete 67 gegeben sein. An der Unterseite des Deckels 32 und/oder an einer Oberseite des flexiblen Materials 29, welches vom Deckel 32 überdeckt wird, kann eine Beflockung 68 vorgesehen sein, um eine dichte Anordnung zu schaffen. Alternativ können Teflongleitdichtungen, Grafitelemente, ein Klettband oder dergleichen angeordnet sein. Dadurch wird der seitliche Randbereich sowohl in X- als auch in Y-Richtung des flexiblen Materials 29 lösbar und in einer Ruhelage abgedichtet zum Deckel 32 angeordnet.

In Figur 4 ist eine sogenannte dynamische Abdichtung 40 im Umlenkbereich 41 vorgesehen, der durch das als fortlaufende Welle umlaufende flexible Band 29 entlang der Strahlfangvorrichtung 19 gebildet ist. Bei der in Figur 4 dargestellten Ausführungsform ist der Strahlfangvorrichtung 19 ein Formungselement 42 zugeordnet, welches zumindest im jeweiligen Randbereich der Strahlfangvorrichtung 19 eine Spalt 44 zur Außenkontur 43 der Strahlfangvorrichtung 19 ausbildet. Der Spalt 44 weist im Randbereich an dem Formungselement 42 und/oder an der Außenkontur 43 der Strahlfangvorrichtung 19 eine Dichtung 46, wie beispielsweise eine Beflockung, Teflongleitdichtung oder Grafitelemente, auf, wodurch eine dichte Anordnung eines durchlaufenden flexiblen Materials 29 erzielt wird.

In Figur 5 ist beispielsweise eine Teilansicht auf das Formungselement 42 mit der Dichtung 46 dargestellt, die dem Spalt 44 gegenüberliegend an der Außenkontur 43 der Strahlfangvorrichtung 19 ebenfalls vorgesehen ist.

In Figur 6 und 7 ist schematisch eine Rollbandabdichtung 49 vorgesehen, die als mechanische Kopplungs- und Abdichtungsstelle dient. Diese Abdichtung umfasst einen bandförmigen Körper 51, der in einem bevorzugt beflockten Schlitz 52 geführt ist, wobei ein seitlicher Führungsspalt 53 durch den bandförmigen Körper 51 geschlossen ist. Durch den seitlichen Führungsspalt 53 wird ein Betätigungselement 54 herausgeführt, um beispielsweise die Strahlfangvorrichtung 19 mit der Bewegung des Schneidkopfes 22 bzw. dessen Linearachse zu koppeln oder direkt anzutreiben. Die seitlich über das Ende des Führungsspaltes 52 herausragende Länge des bandförmigen Körpers 51 kann aufgerollt werden.

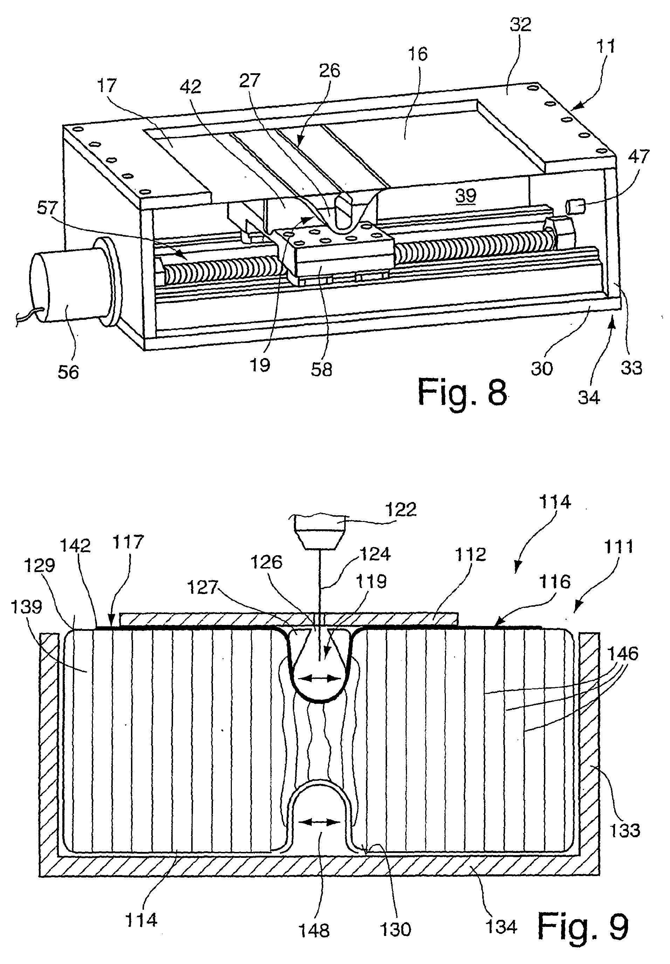

In Figur 8 ist eine alternativ Ausführungsform der Vorrichtung 11 zu Figur 1 dargestellt. Bei dieser Ausführungsform ist ein innen liegendes Antriebselement 57 für die Strahlfangvorrichtung 19 vorgesehen, welches aus dem Grundgehäuse 34 herausführbar ist. Das Antriebselement 57 ist über eine Dichtung aus dem Grundgehäuse 34 herausgeführt. Außerhalb des Grundgehäuses 34 treibt ein Antriebsmotor 56 das Antriebselement 57 an. Ein durch das Antriebselement 57 verfahrbarer Schlitten 58, der bevorzugt auf einer Gleit-, Rollen oder Kugellagerführung vorgesehen ist, greift an der Strahlfangvorrichtung 19 oder einer Komponente 42 zur Verschiebebewegung in und entgegen der X-Richtung an. Alternativ kann vorgesehen sein, dass eine Magnetkupplung zur Einkopplung der Kraftübertragung in den geschlossenen Raum bzw. in die Druckkammer vorgesehen ist. Als Antriebselement kann eine Antriebsspindel, eine Zahnstange, ein Schieber oder dergleichen vorgesehen sein.

Bevorzugt ist zum Antrieb der Strahlfangvorrichtung 19 vorgesehen, dass zwischen dem Antriebsmotor 56 und der Strahlfangvorrichtung 19 eine Überlastkupplung vorgesehen ist, die eine Beschädigung verhindert.

Damit die Strahlfangvorrichtung 19 unterhalb des aufliegenden plattenförmigen Materials 12 mit geringerer Reibung verfahrbar ist, weist die Strahlfangvorrichtung 19 bevorzugt an deren zum plattenförmigen Material 12 weisenden Oberseite Rollenelemente, Bürstensegmente, Gleitwerkstoffe, eine Gleitbeschichtung, ein angetriebenes Band oder angetriebene Rollen sowie Bohrungen zur Bildung eines Luftfilmbettes auf.

Bei der Bearbeitung von plattenförmigem Material 12, welches eine kleinere Abmessung als die Öffnung 36 des Deckels 32 umfasst, ist die freie Auflagefläche bevorzugt durch eine Abdeckung überdeckt. Diese Abdeckung kann als Rollosystem oder als Stabmatte oder dergleichen ausgebildet sein, welche den nicht abgedeckten Auflagebereich überdeckt, um eine Abdeckung des gesamten Auflagetisches zu simulieren. Dadurch kann eine Ausbeulung der nicht überdeckten Auflagefläche aufgrund des Innendruckes durch das flexible Material 29 verhindert werden.

Alternativ zur teilweisen Abdeckung kann vorgesehen sein, dass im geschlossenen Raum 39 eine schiebbare Wand vorgesehen ist, welche zum Druckausgleich im geschlossenen Raum verfahrbar ist, so dass die mit Druck beaufschlagte Fläche der Fläche des plattenförmigen Materials 12, welche auf der ersten und zweiten Auflagefläche 16, 17 aufliegt, entspricht.

Durch die Ausgestaltung eines flexiblen Materials 29, welches mit dem Grundgehäuse 34 eine Druckkammer bildet, ist darüber hinaus ermöglicht, dass beim Verfahren der Strahlfangvorrichtung 19 eine Verklemmung von Gutteilen durch die geschlossene Oberfläche des Bandes nicht gegeben ist.

Zur Bereitstellung einer Grundlastaufnahme ist bevorzugt vorgesehen, dass die Vorspannung des flexiblen Bandes 29 erhöht und/oder eine seitliche Klemmung des flexiblen Materials 29 zum Deckel 32 vorgesehen ist. In Abhängigkeit der Verfahrstrecke der Strahlfangvorrichtung 19 wird die seitliche mechanische Klemmung nach und nach gelöst bzw. wieder verriegelt. Zusätzlich oder alternativ kann eine Stegabstützung vorgesehen sein, welche beispielsweise durch einen oder mehrere parallel zur Strahlfangvorrichtung 19 ausgerichtete Stege ausgebildet ist, die die Auflagefläche 16, 17 von unten stützt.

In Figur 9 ist eine schematische Schnittdarstellung einer alternativen erfindungsgemäßen Vorrichtung 111 dargestellt. Diese Vorrichtung 111 dient zur Aufnahme eines plattenförmigen Materials 112, welches auf einem Auflagetisch 114 aufliegt. Der Auflagetisch 114 umfasst eine erste und zweite Auflagefläche 116, 117, zwischen denen eine Strahlfangvorrichtung 119 angeordnet ist. Diese Vorrichtung 111 ist Teil eines Maschinenbettes oder bildet ein Maschinenbett einer Bearbeitungsmaschine 121, welche insbesondere als Laserschneidmaschine oder Brennstrahlschneidmaschine ausgebildet ist. Über einen Schneidkopf 122 wird ein Schneidstrahl 124 auf das plattenförmige Material 112 gerichtet. An einer Unterseite des plattenförmigen Materials 112 tritt der Schneidstrahl 124 aus und gelangt über eine linienförmige Öffnung 126 in ein Gehäuse 127 der Strahlfangvorrichtung 119. Die Strahlfangvorrichtung 119 ist in X-Richtung bewegbar und folgt dem Schneidkopf 122, sofern dieser zusätzlich zur Y-Richtung in X-Richtung bewegt wird,

Die erste und zweite Auflagefläche 116, 117 sind aus einem flexiblen Material 129 ausgebildet, welches Bestandteil eines geschlossen Raumes 139 ist, der gemäß diesem Ausführungsbeispiel als ein Luftpolster ausgebildet ist. Dieses Luftpolster ist in einem Grundgehäuse 134 aufgenommen und liegt mit einer Unterseite 141 auf einem Boden 130 des Grundgehäuses 134 auf. Seitenwandabschnitte 133 des Grundgehäuses 134 begrenzen die Ausdehnung des Luftpolsters und stützen gleichzeitig die Endflächen des Luftpolsters ab.

Auf dem geschlossenen Raum 139 ist ein flexibles Isoliergewebe 142 vorgesehen, welches sich zwischen der Strahlfangvorrichtung 119 und dem geschlossenen Raum 139 erstreckt. Durch dieses Isoliergewebe 142 ist das plattenförmige Material 112 relativ zum geschlossenen Raum 139 bewegbar. Bevorzugt liegt das plattenförmige Material 112 ruhend auf dem Isoliergewebe 142 und dem geschlossenen Bereich 139 auf und die Strahlfangvorrichtung 119 wird durch eine Transportvorrichtung 144 in X-Richtung bewegt. Das flexible Material 112 kann gespannt zum Luftpolster angeordnet sein.

Ein Innendruck in dem Luftpolster bzw. geschlossenen Raum 139 ist einstellbar und wird bevorzugt durch ein Druckmessgerät überwacht. Eine Steuerung zur Einstellung und Änderung des Innendruckes kann vorgesehen sein. In dem geschlossenen Raum 139 bzw. Luftpolster sind Abstandshalter 146 vorgesehen, die sich im Inneren des Luftpolsters von einer Unterseite 141 bis zur Auflagefläche 116, 117 erstrecken. Durch diese Abstandshalter 146 in Form von Haltegliedern, Bändern, Schnüren oder dergleichen kann eine ebene Auflagefläche 116, 117 geschaffen werden.

Das flexible Isoliergewebe 142 ist aus hitzebeständigem und/oder reißfestem Material ausgebildet, um den geschlossenen Raum 139 vor Temperatur und scharfen Kanten am Gut- oder Restteil zu schützen.

Der Strahlfangvorrichtung 119 ist gegenüberliegend ein Ausgleichselement 148 vorgesehen, um die freie Luftpolsteroberfläche gleich groß zu gestalten. Beim Verfahren der Strahlfangvorrichtung 119 wird gleichzeitig das Ausgleichselement 148 mit bewegt. Dies kann mit der Strahlfangvorrichtung 119 gekoppelt sein oder separat angetrieben werden.

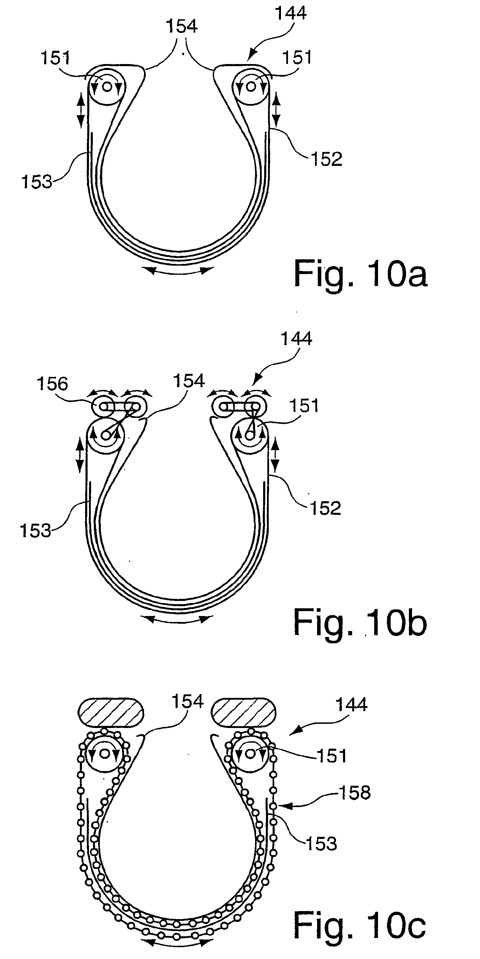

In den Figuren 10a bis c sind alternative Ausführungsformen der Transportvorrichtung 144 dargestellt. Gemäß einer ersten Ausführungsform ist ein umlaufendes Band 152 vorgesehen, welches sich unterhalb der Strahlfangvorrichtung 119 erstreckt. Über zwei Umlenkrollen 151 wird das umlaufende Band 152 angetrieben. Zwischen den gegenläufigen Abschnitten ist ein Gleitelement 153 vorgesehen. Zusätzlich wird die Transportvorrichtung 144 gegenüber der Strahlfangvorrichtung 119 durch ein weiteres Gleitelement 154 abgeschirmt, um eine möglichst geringe Öffnungsbreite zu erzielen. Dieses Gleitelement 154 weist an einem zur Unterseite des plattenförmigen Materials 112 weisenden Abschnitt eine Gleitbeschichtung, Luftdüsen oder dergleichen auf, um die Reibung zum plattenförmigen Material 112 der Strahlfangvorrichtung 119 zu verringen. Alternativ können gemäß Figur 10b Laufrollen 156 vorgesehen sein, welche sich gleichzeitig an der Unterseite des plattenförmigen Materials 112 abstützen und zum Antrieb des umlaufenden Bandes 152 dienen.

In Figur 10c ist eine weitere alternative Ausführungsform dargestellt, bei welcher eine Rollen- oder Kugelkette 158 zum Einsatz kommt. Im Übrigen können die Ausführungsbeispiele und Varianten gemäß Figur 10a und 10b auch für eine Rollenkette 158 als Transportvorrichtung 144 vorgesehen sein.

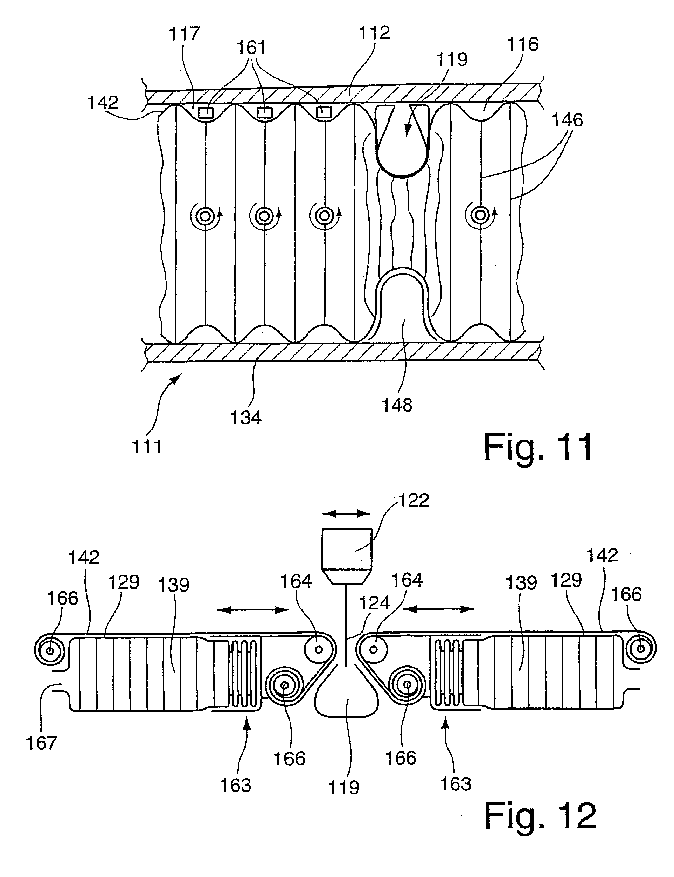

In Figur 11 ist eine weitere Arbeitsposition der Vorrichtung 111 gemäß Figur 9 dargestellt. Die Abstandshalter 146 wurden durch Betätigungselemente verkürzt, wobei beispielsweise jeder zweite Abstandshalter 146 verkürzt wurde. Dadurch weist die Auflagefläche 116, 117 eine gewellte Form auf, so dass Zinken 161 einer Be- und Entladeeinheit das plattenförmige Material 112 untergreifen und aus der Vorrichtung 111 entnehmen können. Die Betätigungselemente können auch einzeln ansteuerbar sein, um die Auflagefläche 116, 117 auszurichten. Durch die wellenförmige Anordnung der Luftpolsteroberfläche beim Betätigen der Abstandshalter 146 wird die Oberfläche des Luftpolsters vergrößert. Um diese vergrößerte Oberfläche freizugeben, ist beispielsweise ermöglicht, dass die Strahlfangvorrichtung 119 in oder entgegen der Y-Richtung aus dem Luftpolster herausfahrbar ist, so dass dadurch ein nicht mehr benötigter Raum zur Ausbildung der wellenförmigen Oberfläche genutzt werden kann. Alternativ kann vorgesehen sein, dass die Strahlfangvorrichtung 119 beispielsweise in einer Endposition in Z-Richtung verfahrbar ist, um dieselbe Wirkung zu erzielen.

In Figur 12 ist eine alternative Ausführungsform zu Figur 9 dargestellt. Bei dieser Ausführungsform ist für jede Auflagefläche 116, 117 ein geschlossener Raum 139,als Luftpolster vorgesehen. Diese geschlossenen Räume 139 sind jeweils durch ein flexibles Isoliergewebe 142 abgedeckt und bilden die Auflagefläche 116, 117. Zwischen der Strahlfangvorrichtung 119 und dem jeweiligen geschlossenen Raum 139 ist ein Luftpolsterspeicher 163 vorgesehen, der beim Verfahren der Strahlfangvorrichtung 119 in X-Richtung eine Aufnahme des nichtbenötigten flexiblen Materials 112 des Luftpolsters ermöglicht. Auf der gegenüberliegenden Seite wird das gespeicherte flexible Material 112 auseinandergefaltet, um eine größere Auflagefläche auszubilden.

Der Luftpolsterspeicher 163 nimmt bevorzugt eine Umlenkrolle 164 für das flexible Isoliergewebe 142 auf, um dieses nahe zur linienförmigen Öffnung 126 des Gehäuses 127 zu positionieren und einen Spalt zur Strahlfangvorrichtung 119 gering zu halten. Zusätzlich ist eine Aufwickeleinheit 166 vorgesehen, um das flexible Isoliergewebe 142 während der Größenveränderung der Auflageflächen 116, 117 aufzuwickeln.

Dem Luftpolsterspeicher 163 gegenüberliegend ist ebenfalls eine Aufwickeleinheit für das flexible Material 112 vorgesehen, um weitere Funktionen, insbesondere für die Automatisierung bzw. zum Be- und Entladen, zu realisieren. Das flexible Isoliergewebe 142 kann eine Aufnahme der Gut- und/oder Restteile in einer Be- und Entladeposition ermöglichen.

Zum einfachen Druckausgleich beim Verfahren der Strahlfangvorrichtung 119 sind die beiden geschlossenen Räume 139 durch eine Druckausgleichsleitung 167 miteinander verbunden. Diese Leitung 167 weist bevorzugt einen geringen Strömungswiderstand auf. Zusätzlich kann über diese Druckausgleichsleitung 167 ein jeweiliger Innendruck im geschlossenen Raum 139 kontrolliert und aufgebaut bzw. eingestellt werden.

Alle vorgenannten Merkmale sind jeweils für sich erfindungswesentlich und können beliebig miteinander kombiniert werden.

## Patentansprüche

1. Vorrichtung zur Aufnahme von plattenförmigen Materialien (12) für zumindest einen Trennvorgang im plattenförmigen Material (12) mit einer während des Trennvorganges zumindest in Y-Richtung bewegbaren Schneidstrahleinrichtung,
- mit einer ersten und zweiten Auflagefläche (16, 17; 116, 117), die gemeinsam einen Auflagetisch (14; 114) zur Aufnahme des plattenförmigen Materials (12; 112) bilden und
- mit einer linienförmigen Strahlfangvorrichtung (19; 119), die zwischen der ersten und zweiten Auflagefläche (16, 17; 116, 117) angeordnet und in X-Richtung verfahrbar vorgesehen ist,
**dadurch gekennzeichnet, dass**
- die erste und die zweite Auflagefläche (16, 17; 116, 117) aus einem flexiblen Material (29; 129) ausgebildet sind, das einen Bestandteil von zumindest einem geschlossenen Raum (39; 139) bildet, der mit einem gasförmigen Medium unter Druck gefüllt ist.

2. Vorrichtung nach Anspruch 1, **dadurch gekennzeichnet, dass** das flexible Material (29) als Band ausgebildet ist, dessen äußerer Randbereich ein nach oben offenes Grundgehäuse (34) zum Aufbau eines Innendrucks abschließt.

3. Vorrichtung nach Anspruch 1 oder 2, **dadurch gekennzeichnet, dass** ein Innendruck im geschlossenen Raum (39) mit einem Druckmessgerät erfassbar ist und vorzugsweise eine Druckregelung zur Einstellung des Innendruckes zumindest in Abhängigkeit der Dicke und des Werkstoffs des plattenförmigen Materials (12) vorgesehen ist.

4. Vorrichtung nach einem der vorhergehenden Ansprüche, **dadurch gekennzeichnet, dass** zum Verfahren der Strahlfangvorrichtung (19) das zum Grundgehäuse (34) ruhend angeordnete flexible Material (29) unterhalb der Strahlfangvorrichtung (19) entlang eines zumindest teilweise gebildeten Spaltes (44) geführt und umgelenkt wird, der durch ein an der Strahlfangvorrichtung (19) angeordnetes Formungselement (42) ausgebildet ist und einen Umlenkbereich (41) des flexiblen Materials (29) zum Grundgehäuse (34) bildet und vorzugsweise zwischen dem Formungselement (42) und dem flexiblen Material (29) und/oder zwischen einer Außenkontur (43) der Strahlfangvorrichtung (19) und dem flexiblen Material (29) und/oder zwischen einer Stirnseite der Strahlfangvorrichtung (19) und einem auf der Auflageflächen (16, 17) aufliegenden plattenförmigen Material (12) reibungsarme Elemente vorgesehen sind.

5. Vorrichtung nach einem der vorhergehenden Ansprüche, **dadurch gekennzeichnet, dass** die Stirnseiten (31) des flexiblen Materials (29) unter Vorspannung, vorzugsweise durch eine Spannvorrichtung, am Grundgehäuse (34) befestigt sind und vorzugsweise eine seitliche Abdichtung (38) des flexiblen Materials (29) in X- und/oder Y-Richtung verlaufend durch eine lösbar am Grundgehäuse (34) angeordnete Abdichtung vorgesehen ist, die vorzugsweise durch eine Magnethalterung, insbesondere mit Flockbett und/oder Moosgummi, ein Klettband, eine Vakuumansaugung oder eine mechanische Klemmung lösbar abdichtend ausgebildet ist.

6. Vorrichtung nach einem der vorhergehenden Ansprüche, **dadurch gekennzeichnet, dass** das flexible Material (29) in einem Umlenkbereich (41) durch eine dynamische Abdichtung (40), vorzugsweise ein Flockbett oder eine gleitende Dichteinrichtung, zum Grundgehäuse (34) angeordnet ist.

7. Vorrichtung nach einem der Ansprüche 1 bis 6, **dadurch gekennzeichnet, dass** zumindest ein Antriebs- und/oder Führungselement (57), das an der Strahlfangvorrichtung (19) oder einer daran angeordneten Komponente (42) angreift, aus dem geschlossenen Raum (39) herausgeführt und von einem außerhalb des geschlossenen Raums (39) angeordneten Antriebsmotor angetrieben ist oder eine Magnetkupplung zur berührungslosen Kraftübertragung zwischen dem in dem Grundgehäuse (34) angeordneten Antriebs- und/oder Führungselement (57) und dem außerhalb angeordneten Antriebsmotor vorgesehen ist.

8. Vorrichtung nach einem der Ansprüche 1 bis 6, **dadurch gekennzeichnet, dass** eine seitliche Rollbandabdichtung (49) vorgesehen ist, die insbesondere einen seitlichen Führungsspalt (53) zum Verfahren der Strahlfangvorrichtung (19) abschließt.

9. Vorrichtung nach einem der vorhergehenden Ansprüche, **dadurch gekennzeichnet, dass** eine Kühlung der Auflageflächen (16, 17) des geschlossenen Raumes (39) von innen, vorzugsweise durch eine Gasumwälzung, eine Sprühkühlung, eine Wasserflutung oder zumindest durch an der Strahlfangvorrichtung (19) angeordnete mitbewegte Kühlelemente, vorgesehen ist.

10. Vorrichtung nach Anspruch 1, **dadurch gekennzeichnet, dass** die erste und die zweite Auflagefläche (116, 117) aus einem gemeinsamen flexiblen Material (129) ausgebildet sind und einen abgeschlossenen Raum (139) als Luftpolster bilden.

11. Vorrichtung nach Anspruch 10, **dadurch gekennzeichnet, dass** auf dem geschlossenen Raum (139), der durch das flexible Material (29) ausgebildet ist, ein flexibles Isoliergewebe (142), vorzugsweise auswechselbar und/oder gegenüber dem geschlossenen Raum (139) verschiebbar, vorgesehen ist, das insbesondere reiß- und/oder hitzebeständig ist.

12. Vorrichtung nach Anspruch 11, **dadurch gekennzeichnet, dass** zwischen einer Auflagefläche (116, 117) und einer Unterseite (141) des geschlossenen Raumes (139) Abstandshalter (146) vorgesehen sind, die vorzugsweise als Halteglieder, Bänder oder Schnüre ausgebildet sind und vorzugsweise dass der oder die Abstandshalter (146) zumindest bereichsweise entlang der Auflageflächen (116, 117) im Abstand zwischen der Auflagefläche (116, 117) und der Unterseite (141) verringerbar sind.

13. Vorrichtung nach einem der Ansprüche 11 oder 12, **dadurch gekennzeichnet, dass** zwischen der ersten und zweiten Auflagefläche (116, 117) eine Strahlfangvorrichtung (119) vorgesehen ist, deren Öffnung (131) zur Aufnahme des nach unten austretenden Schneidstrahles (124) während der Bearbeitung des plattenförmigen Materials (112) im Wesentlichen in der Ebene der Auflagefläche (116, 117) liegt und das Gehäuse (127) sich zum geschlossenen Raum (139) hin erstreckt und insbesondere vom flexiblen Isoliergewebe (142) umgeben ist und dass vorzugsweise der Strahlfangvorrichtung (119) gegenüberliegend an der Unterseite (141) des geschlossenen Raumes (139) ein dem Gehäuse (127) der Strahlfangvorrichtung (119) entsprechendes Ausgleichselement (148) zugeordnet ist, das gemeinsam mit der Strahlfangvorrichtung (119) verfahrbar ist.

14. Vorrichtung nach Anspruch 1, **dadurch gekennzeichnet, dass** die erste und zweite Auflagefläche (116, 117) jeweils durch einen als Luftpolster ausgebildeten und geschlossenen Raum (139) ausgebildet sind und vorzugsweise der erste und zweite geschlossene Raum (139) durch eine Druckausgleichsleitung (167) miteinander verbindbar sind.

15. Vorrichtung nach Anspruch 14, **dadurch gekennzeichnet, dass** die erste und zweite Auflagefläche (116, 117) jeweils durch ein flexibles Isoliergewebe (142) abgedeckt sind und vorzugsweise der erste und zweite abgeschlossene Raum (139) jeweils einen Luftpolsterspeicher (163) umfasst, welcher vorzugsweise beidseitig der Strahlfangvorrichtung (119) angeordnet ist, wobei insbesondere der Luftpolsterspeicher (163) eine Umlenkeinheit (164) und/oder eine Aufwickeleinheit (166) für das flexible Isoliergewebe (142) aufweist.

## Claims

1. A device for supporting plate-like materials (12) for at least one separating process in the plate-like material (12), having a cutting beam arrangement movable at least in the Y direction during the separating process,
- comprising a first and a second supporting surface (16, 17; 116, 117) which together form a supporting table (14; 114) for supporting the plate-like material (12; 112), and
- comprising a line-like beam-catching device (19; 119) which is arranged between the first and the second supporting surface (16, 17; 116, 117) and is provided such as to be traversable in the X-direction.
**characterized in that**
- the first and the second supporting table (16, 17; 116, 117) are formed from a flexible material (29; 129) which forms a component part of at least one closed space (39; 139) which is filled with a gaseous medium under pressure.

2. The device as claimed in claim 1, **characterized in that** the flexible material (29) is designed as a band whose outer marginal region closes a basic housing (34), open at the top, for building up an internal pressure.

3. The device as claimed in claim 1 or 2, **characterized in that** an internal pressure in the closed space (39) is detected by a pressure-measuring instrument, and pressure regulation for setting the internal pressure at least as a function of the plate-like material (12) and of the thickness of the latter is preferably provided.

4. The device as claimed in one of the preceding claims, **characterized in that**, to traverse the beam-catching device (19), the flexible material (29) arranged statically relative to the basic housing (34) is guided and deflected below the beam-catching device (19) along an at least partly formed gap (44) which is formed by a forming element (42) arranged on the beam-catching device (19) and which forms a deflection region (41) of the flexible material (29) relative to the basic housing (34) and preferably low-friction elements are provided between the forming element (42) and the flexible material (29) and/or between an outer contour (43) of the beam-catching device (19) and the flexible material (29) and/or between an end face of the beam-catching device (19) and a plate-like material (12) resting on the supporting surface (16, 17).

5. The device as claimed in one of the preceding claims, **characterized in that** end faces (31) of the flexible material (29) are fastened to the basic housing (34), preferably under pretension, by a tensioning device and preferably a lateral seal (38) of the flexible material (29) is provided so as to run in the X- and/or Y-direction by a seal which is detachably arranged on the basic housing (34) and which is formed so as to seal in a detachable manner by magnetic retention, and/or foam rubber, a Velcro strip, vacuum suction or mechanical clamping.

6. The device as claimed in one of the preceding claims, **characterized in that** the flexible material (29) is arranged in a deflection region (41) by a dynamic seal (40) preferably by a flock bed or a sliding sealing means relative to the basic housing (34).

7. The device as claimed in one of the claims 1 to 6, **characterized in that** at least one drive and/or guide element (57) which acts on the beam-catching device (19) or a component (42) arranged thereon is led out of the closed space (39) and is driven by a drive motor arranged outside the closed space (39), or a magnetic coupling is provided for the non-contact force transmission between the drive and/or guide element (57), arranged in the basic housing (34), and the drive motor arranged outside.

8. The device as claimed in one of the claims 1 to 6, **characterized in that** a lateral rolling band seal (49) which closes off a lateral guide gap (53) for the traverse of the beam-catching device (19) is provided.

9. The device as claimed in one of the preceding claims, **characterized in that** cooling of the supporting surfaces (16, 17) of the closed space (39) from inside is provided, by gas circulation, spray cooling, water flooding or by cooling elements arranged on the beam-catching device (19) and moved along with the latter.

10. The device as claimed in claim 1, **characterized in that** the first and the second supporting surface (116, 117) are formed from a common flexible material (12) and form a closed space (139) as air cushion.

11. The device as claimed in claim 10, **characterized in that** a flexible insulating fabric (142), which in particular is tear- and/or heat-resistant, is provided, preferably interchangeably and/or movable with respect to the closed space (139), on the closed space which is formed by the flexible material (129).

12. The device as claimed in claim 11, **characterized in that** spacers (146) are provided between a supporting surface (116, 117) and an underside (141) of the closed space (139), which preferably are designed as retaining members, bands or cords and preferably that one or more spacers (146), at least in regions along the supporting surface (116, 117), are reduced in distance between the supporting surface (116, 117) and the underside (141).

13. The device as claimed in one of the claims 11 or 12, **characterized in that** a beam-catching device (119) is provided between the first and the second supporting surface (116, 117), the opening (131) of which beam-catching device (119), for receiving the downwardly discharging cutting beam (124) during the processing of the plate-like material (112), lies essentially in the plane of the supporting surface (116, 117), and the housing (127) extends toward the closed space (139) and is in particular surrounded by the flexible insulating fabric (142) and that preferably a compensating element (148) is assigned opposite the beam-catching device (119) on the underside (141) of the closed space (139), said compensating element (148) corresponding to the housing (127) of the beam-catching device (119) and being traversable together with the beam-catching device (119).

14. The device as claimed in claim 1, **characterized in that** the first and the second supporting surface (116, 117) are each formed by a closed space (139) designed as an air cushion and preferably that the first and the second closed space is connected to one another by a pressure compensation line (167).

15. The device as claimed in claim 14, **characterized in that** the first and the second supporting surface (116, 117) are each covered by a flexible insulating fabric (142) and preferably the first and the second closed-off space (139) each comprise an air cushion store (163) which is arranged on both sides of the beam-catching device (119), the air cushion store (163) in particular having a deflection unit (164) and/or a winding unit (166) for the flexible insulating fabric (142).

## Revendications

1. Dispositif pour recevoir des matériaux (12) sous forme de plaques pour au moins une opération de séparation dans le matériau (12) en forme de plaque, comprenant un dispositif à faisceau de découpage déplaçable au moins dans la direction Y pendant l'opération de séparation,
- avec une première et une deuxième surface d'appui (16, 17 ; 116, 117), qui forment ensemble une table d'appui (14; 114) pour recevoir le matériau en forme de plaque (12 ; 112) et
- avec un dispositif de capture de faisceau de forme linéaire (19 ; 119), qui est disposé entre la première et la deuxième surface d'appui (16, 17 ; 116, 117) et qui est prévu de manière déplaçable dans la direction X,
**caractérisé en ce que**
- la première et la deuxième surface d'appui (16, 17 ; 116, 117) sont réalisées dans un matériau flexible (29 ; 129) qui fait partie d'au moins un espace fermé (39 ; 139) qui est rempli d'un milieu gazeux sous pression.

2. Dispositif selon la revendication 1, **caractérisé en ce que** le matériau flexible (29) est réalisé sous forme de bande dont la région de bord extérieure ferme un boîtier de base (34) ouvert vers le haut pour produire une pression interne.

3. Dispositif selon la revendication 1 ou 2, **caractérisé en ce qu'**une pression interne dans l'espace fermé (39) peut être détectée avec un appareil de mesure de pression et de préférence une régulation de la pression est prévue pour ajuster la pression interne au moins en fonction de l'épaisseur et de la matière constituant le matériau (12) en forme de plaque.

4. Dispositif selon l'une quelconque des revendications précédentes, **caractérisé en ce que** pour déplacer le dispositif de capture de faisceau (19), le matériau flexible (29) disposé de manière immobile par rapport au boîtier de base (34) est guidé et dévié sous le dispositif de capture de faisceau (19) le long d'une fente (44) formée au moins en partie, laquelle est réalisée par un élément de façonnage (42) disposé au niveau du dispositif de capture de faisceau (19) et forme une région de déviation (41) du matériau flexible (29) par rapport au boîtier de base (34) et **en ce que** de préférence entre l'élément de façonnage (42) et le matériau flexible (29) et/ou entre un contour extérieur (43) du dispositif de capture de faisceau (19) et le matériau flexible (29) et/ou entre un côté frontal du dispositif de capture de faisceau (19) et un matériau en forme de plaque (12) reposant sur les surfaces d'appui (16, 17), sont prévus des éléments à faible friction.

5. Dispositif selon l'une quelconque des revendications précédentes, **caractérisé en ce que** les côtés frontaux (31) du matériau flexible (29) sont fixés par précontrainte, de préférence par un dispositif de serrage, sur le boîtier de base (34) et de préférence une garniture d'étanchéité latérale (38) du matériau flexible (29) s'étendant dans la direction X et/ou dans la direction Y, est constituée par une garniture d'étanchéité disposée de manière amovible sur le boîtier de base (34), qui est réalisée de manière hermétique et amovible de préférence par une fixation magnétique, en particulier un lit de flocons et/ou un caoutchouc mousse, une bande de type velcro, une aspiration sous vide ou un serrage mécanique.

6. Dispositif selon l'une quelconque des revendications précédentes, **caractérisé en ce que** le matériau flexible (29) est disposé dans une région de déviation (41) à travers une garniture d'étanchéité dynamique (40), de préférence un lit de flocons ou un dispositif d'étanchéité glissant, par rapport au boîtier de base (34).

7. Dispositif selon l'une quelconque des revendications 1 à 6, **caractérisé en ce qu'**au moins un élément d'entraînement et/ou de guidage (57), qui vient en prise avec le dispositif de capture de faisceau (19) ou avec un composant (42) disposé dessus, est ressorti de l'espace fermé (39) et est entraîné par un moteur d'entraînement disposé à l'extérieur de l'espace fermé (39) ou un accouplement magnétique est prévu pour le transfert de force sans contact entre l'élément d'entraînement et/ou de guidage (57) disposé dans le boîtier de base (34) et le moteur d'entraînement disposé en dehors.

8. Dispositif selon l'une quelconque des revendications 1 à 6, **caractérisé en ce qu'**une garniture d'étanchéité latérale en forme de bande roulante (49) est prévue, laquelle ferme notamment une fente de guidage latérale (53) pour le déplacement du dispositif de capture de faisceau (19).

9. Dispositif selon l'une quelconque des revendications précédentes, **caractérisé en ce qu'**il est prévu un refroidissement des surfaces d'appui (16, 17) de l'espace fermé (39) depuis l'intérieur, de préférence par une circulation de gaz, un refroidissement par pulvérisation, une injection d'eau ou au moins par des éléments de refroidissement déplacés en même temps et disposés sur le dispositif de capture de faisceau (19).

10. Dispositif selon la revendication 1, **caractérisé en ce que** la première et la deuxième surface d'appui (116, 117) sont réalisées par un matériau flexible commun (129) et forment un espace fermé (139) en tant que coussin d'air.

11. Dispositif selon la revendication 10, **caractérisé en ce que** l'on prévoit sur l'espace fermé (139), qui est réalisé par le matériau flexible (29), un tissu isolant flexible (142), de préférence remplaçable et/ou déplaçable par rapport à l'espace fermé (139), lequel est notamment résistant à la déchirure et/ou à la chaleur.

12. Dispositif selon la revendication 11, **caractérisé en ce que** des éléments d'espacement (146) sont prévus entre une surface d'appui (116, 117) et un côté inférieur (141) de l'espace fermé (139), lesquels sont réalisés de préférence sous forme d'organes de retenue, de bandes ou de cordons et de préférence **en ce que** le ou les éléments d'espacement (146) peuvent être réduits au moins en partie le long des surfaces d'appui (116, 117) sur la distance entre la surface d'appui (116, 117) et le côté inférieur (141).

13. Dispositif selon l'une quelconque des revendications 11 ou 12, **caractérisé en ce qu'**entre la première et la deuxième surface d'appui (116, 117), on prévoit un dispositif de capture de faisceau (119) dont l'ouverture (131) pour recevoir le faisceau de découpage (124) émis vers le bas pendant l'usinage du matériau en forme de plaque (112) se situe essentiellement dans le plan de la surface d'appui (116, 117) et le boîtier (127) s'étend vers l'espace fermé (139) et est en particulier entouré par le tissu isolant flexible (142) et **en ce que** de préférence un élément de compensation (148) correspondant au boîtier (127) du dispositif de capture de faisceau (119) est associé au dispositif de capture de faisceau (119) à l'opposé du côté inférieur (141) de l'espace fermé (139), et peut être déplacé conjointement avec le dispositif de capture de faisceau (119).

14. Dispositif selon la revendication 1, **caractérisé en ce que** la première et la deuxième surface d'appui (116, 117) sont à chaque fois réalisées par un espace fermé (139) réalisé sous forme de coussin d'air, et de préférence le premier et le deuxième espace fermé (139) peuvent être connectés l'un à l'autre par une conduite de compensation de la pression (167).

15. Dispositif selon la revendication 14, **caractérisé en ce que** la première et la deuxième surface d'appui (116, 117) sont recouvertes chacune par un tissu isolant flexible (142) et de préférence le premier et le deuxième espace fermé (139) comprennent chacun un accumulateur formant coussin d'air (163), qui est de préférence disposé de part et d'autre du dispositif de capture de faisceau (119), l'accumulateur formant coussin d'air (163) présentant notamment une unité de déviation (164) et/ou une unité d'enroulement (166) pour le tissu isolant flexible (142).
